Europäisches Patentamt

European Patent Office

Office européen des brevets

(19)

(11) Publication number: **0 248 451**
**A2**

# (12) EUROPEAN PATENT APPLICATION

(21) Application number: **87108217.8**

(22) Date of filing: **05.06.87**

(51) Int. Cl.⁴: **G01T 1/29** , **G02F 1/03** , **H05G 1/60**

(30) Priority: **06.06.86 US 871298**

(43) Date of publication of application:
**09.12.87 Bulletin 87/50**

(84) Designated Contracting States:
**BE CH DE FR GB IT LI NL SE**

(71) Applicant: **Quantum Diagnostics, Ltd.**
**77 Arkay Drive**
**Hauppage New York(US)**

(72) Inventor: **Birnbach, Curtis**
**2600 Netherlands Avenue**
**Bronx New York(US)**

(74) Representative: **Koch, Günther, Dipl.-Ing. et al**
**Postfach 920**
**D-8000 München 33(DE)**

(54) **Imaging system employing X-ray induced scintillation in a crystal spatial modulator.**

(57) An X-ray imaging system in which X-radiation (10) containing an image is input as the modulating source to a spatial light modulator (11), which modulates a reflected reading beam (22) such as collimated light, to detect the image, or alternatively in which the electrical state of the modulator is sensed directly. An X-ray image detector includes a window layer for transmitting X-radiation; an electro-optically active layer (3) located so as to receive X-radiation through said window layer (1), the active layer (3) being adapted for having an electric field pattern therein which is locally variable as a function of the X-radiation received, thereby containing an electric field pattern which is representative of such radiation; and a sensing layer (5) at which the X-ray image is sensed. In one form of the invention, the sensing layer (5) has contacts (30, 31, 32, 33) thereon for measuring the electrical potentials in the layer at a plurality of points, and thereby detecting the X-ray image. In another form, the sensing layer (5) is adapted for transmitting a reading beam (22) having a selected wavelength to the active layer (3). In this form, the active layer (3) comprises material that has a local index of refraction for the selected wavelength of the reading beam (22) that varies as a function of the electric field in the active layer, and thus as a function of the received X-ray image. A reading beam (22) may be projected toward the active layer (3), to generate a reflected output beam (9) containing information representative of the input X-ray image. The reflected output beam (9) may be further processed by a Fourier transform processor (15) to remove spurious information.

FIG.2

FIG.3

## IMAGING SYSTEM EMPLOYING X-RAY INDUCED SCINTILLATION IN A CRYSTAL SPATIAL MODULATOR

### BACKGROUND OF THE INVENTION

#### Field of the Invention

The present invention is directed toward an X-ray imaging system, and more particularly toward an imaging system in which X-rays containing image information are input as the modulating source to a spatial light modulator, which modulates a reflected reading beam such as collimated light to detect the image, or alternatively in which the electrical state of the modulator is sensed directly.

#### Description of Related Art

Much attention has been directed toward developing devices for low-level X-ray imaging. Most of this work has been focused on a device known generally as an "image intensifier", which is a large-field optical device utilizing electrostatic charge amplification techniques, in conjunction with a scintillation screen closely coupled to the input cathode of the device. While such a device has provided adequate performance for medical imaging applications, it leaves much to be desired with respect to its limited spatial resolution, contrast detectability, and X-ray sensitivity.

Various forms of imaging intensifying devices are known, both for intensifying light images, and also images formed with radiation other than visible light, such as X-rays, ultraviolet light, or infrared light. For example, U.S. Patent 3,524,064 to Keyes discloses a spatial light modulator including a layer of electro-optic material and a layer of photoconductive material sandwiched between a pair of transparent electrodes. The electro-optic material is a crystal of high-resistivity gallium arsenide (GaAs), which exhibits a variable optical index of refraction in response to an electric field. The photoconductive layer is a dielectric lamina of a material having a high dark electrical impedance, such as cadmium sulfide. An electrical charge is applied across the two intermediate layers by connecting a power source to the two electrodes. One electrode is exposed to visible light, which changes the resistance of the photoconductive material as a function of the intensity of the light. This change in resistance changes the electric field applied to the electro-optic material, and thereby varies its index of refraction. An intensified image corresponding to the incident light can then be viewed through the electrode opposite to that which was exposed to visible light.

The Keyes patent is typical of devices for amplification and projection of optical light images. Keyes uses two separate layers which perform different functions for this purpose: controlling an electrostatic field by the illumination of a photoconductor; and varying the transparency of an electro-optic material, which is separate from the photoconductor, by the application of such electric field. In Keyes, it is said to be essential for the electro-optic material to be instantaneously responsive to the applied electric field, to make it possible to continuously amplify a changing image. Keyes mentions the possibility of developing an image intensifier for X-rays, but does not disclose any specifics of a system for use in the X-ray domain.

It would be desirable to make a separate photoconductive material layer unnecessary, by taking advantage of the high-energy imaging available with X-rays. In other words, X-rays, rather than light, would be the source of modulating energy. In such a system, the photons of the X-rays would be directly converted into an electric field within an electric-optic layer, which would thereby directly vary the optical index of refraction of the electro-optic material without any need for a separate photoconductive layer.

U.S. Patent 3,791,717 to Honda is an example of a light modulation apparatus which operates as an intensity modulation device and has a single active modulation layer. The modulator includes a crystalline light modulation element sandwiched between a pair of transparent electrodes to which an initial DC potential is applied. The light modulation element is composed, for example, of cadmium sulfide and cadmium selenide, which are compounded so that the layer has both electro-optic and photoconductive characteristics. However, again, the Honda development is used only with a visible light modulating source. Further, its operation is limited to operating as an intensity modulation device, much like the shutter of a camera, rather than an imaging device.

Other patents in the imaging field are U.S. Patent 3,938,878 to Fox, U.S. Patent 4,428,873 to Murayama et al., U.S. Patent 4,277,146 to Morgan et al., and U.S. Patent 4,391,901 to Land et al.

In the foregoing patents, light, rather than X-rays, is used as the input to the electro-optical element. Although the Keyes patent suggests that an X-ray image can be intensified, the art has not appreciated the advantages to be obtained, particularly in the medical field, by devices adapted for high-energy, high-quality X-ray imaging. Neither has the art appreciated that X-ray imaging can be accomplished by use of a device having a single active layer comprising a crystalline material having electro-optical properties. Nor has such a system been realized.

## SUMMARY OF THE INVENTION

Accordingly, one primary object of the invention is to provide an image detector employing a single active layer having electro-optical properties for the detection of X-ray images.

According to one aspect of the invention, an X-ray image detector comprises an electro-optically active body for receiving X-radiation containing an image; the body being adapted for detecting such image by forming a refraction pattern for differently refracting incident light in response to such received X-radiation. According to another aspect of the invention, such body is adapted for detecting such image by having a detectable electric field pattern therein that is representative of such received X-radiation.

In one embodiment of the invention, an X-ray image detector comprises a window layer for transmitting X-radiation; an electro-optically active layer for receiving X-radiation through the window layer, the active layer having a local electric field therein which varies as a function of the X-radiation received by the active layer, the active layer thereby containing an electric field pattern that is representative of the received X-radiation; and a sensing layer having electrical potentials therein which vary locally as a function of the electric field pattern in the active layer. Electrical potentials sensed in the sensing layer are indicative of the local intensity of X-radiation received by the active layer.

In another form of the invention, an X-ray imaging system comprises a plurality of said X-ray image detectors mounted in a frame. An arrangement is provided for electrically interconnecting respective contact means on each of the detectors, and connecting these to a plurality of corresponding terminals for sensing the electrical potentials on the respective sensing layers and thereby the received X-ray image.

According to another embodiment, the sensing layer is adapted for transmitting a reading beam having a selected wavelength to the active layer, the active layer comprising material that has a local index of refraction for the selected wavelength that varies as a function of the electric field in the active layer, so that the active layer containes a refraction pattern representative of the received X-radiation. The reading beam is projected toward the active layer so as to produce a reflected output beam containing image information. A plurality of detectors may be mounted in a frame, in which case the reflected output beam may contain both information that is representative of the image, and spurious information that is due to the presence of the frame. An optical Fourier transform processor may be provided for removing such spurious information. The Fourier transform processor advantageously comprises first and second Fourier lenses, and a Fourier domain filter between the lenses which contains a Fourier transform related to the frame.

The invention also relates to a method of X-ray imaging comprising providing an X-ray image detector adapted for having an electric field pattern therein which is representative of such received X-rays; projecting an X-ray beam containing an X-ray image toward the detector so as to form in the detector an electric field pattern that is representative of the X-ray image; and sensing the electric field pattern so as to detect the X-ray image. The invention also relates to sensing such electric field pattern by providing an active layer which comprises material whose local index of refraction for a reading beam having a selected wavelength varies as a function of the electric field across the active layer, thereby forming a refraction pattern in the active layer as a function of the projected X-ray image. The electric field may be sensed by projecting a reading beam having such selected wavelength toward the active layer so as to produce a reflected output beam that is representative of the refraction pattern, and hence of the received X-ray image. The electric field may further be sensed by measuring the electrical potential at a plurality of points within the electric field.

Other objects, features and advantages of the invention will be seen in the following detailed description of preferred embodiments thereof, with reference to the accompanying drawings.

## BRIEF DESCRIPTION OF THE DRAWINGS

Fig. 1 is a side elevation of an X-ray image detector according to an embodiment of the invention;

Fig. 2 is a diagram showing the X-ray image detector of Fig. 1 along with an X-ray input beam and an arrangement for generating and applying a collimated light reading beam;

Fig. 3 is a plan view of an assembly comprising a plurality of X-ray imaging detectors as in Fig. 1 accommodated in a frame;

Fig. 4 is a cross-sectional view taken along line 4-4 in Fig. 3;

Fig. 5 is a diagram showing an arrangement for processing the output of the assembly of Fig. 3, including a Fourier transform processor;

Fig. 6 is a plan view of an X-ray image detector according to another embodiment of the invention;

Fig. 7 is a side elevation taken along line 7-7 of Fig. 6; and

Fig. 8 is a plan view of an assembly comprising a plurality of X-ray image detectors as in Figs. 6 and 7 accommodated in a frame.

## DETAILED DESCRIPTION OF PREFERRED EMBODIMENTS

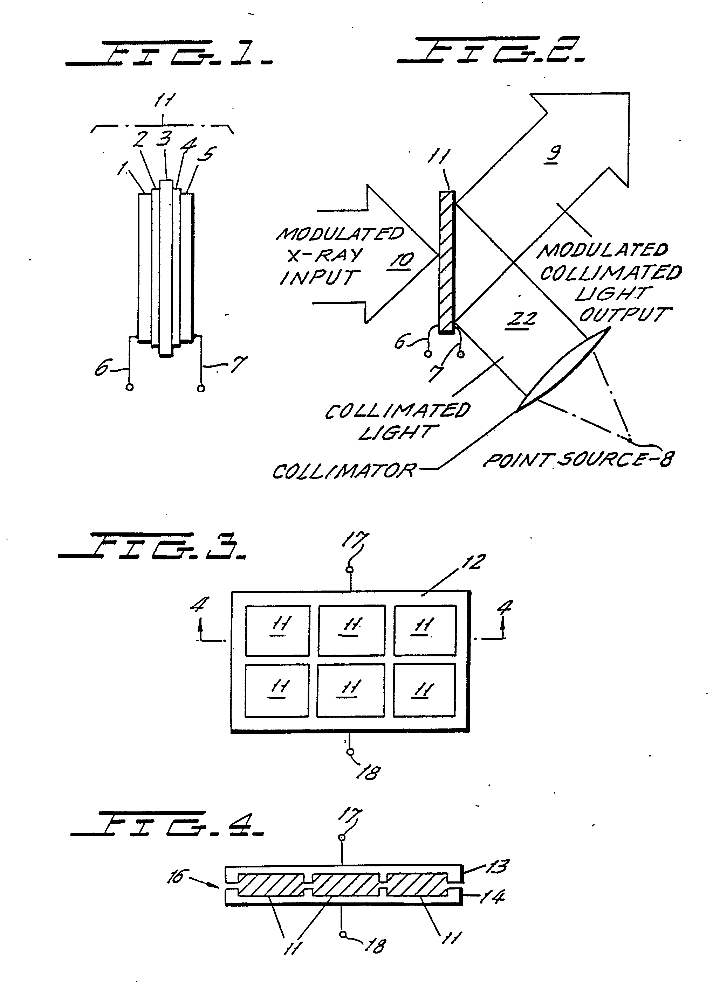

Referring to Fig. 1, there is seen an image detector 11 according to a preferred embodiment of the invention. A first conductive window layer 1 comprises a thin film of an electrically conductive material, such as a 3-micron layer of indium tin oxide. The layer 1 is totally opaque to visible light, but substantially transparent to X-rays. It is highly advantageous to have a window layer that is opaque to light, since the window layer prevents ambient light energy from entering the device and affecting the electric field in the active electro-optical layer. Adjacent to the layer 1 is a first dielectric layer 2 which is formed of a material having controlled leakage characteristics, such as paraxylene or silicon dioxide.

Located adjacent to the layer 2 is the active electro-optical layer 3, which comprises a crystalline material that exhibits the Pockels effect and has appropriate electro-optical characteristics. Materials that are presently contemplated to be usable include potassium di-deuterium phosphate ($KD_2PO_4$ or KD*P); lithium niobate ($LiNbO_3$); bismuth germanium oxide ($Bi_{12}GeO_{20}$); bismuth silicon oxide ($Bi_{12}SiO_{20}$); cadmium telluride (CdTe); gallium arsenide (GaAs); gallium phosphide (GaP); mercuric and cesium iodides; rubidium di-hydrogen phosphate ($RbH_2PO_4$ or RDP); and rubidium di-deuterium phosphate ($RbD_2PO_4$ or RD*P). These materials are selected according to several criteria. The material should have a low half-wave voltage, say less than about 5000 V. Light transmission in the visible spectrum should be relatively high, say at least about 80 to 85 percent. The material should also be growable with an appropriate crystalline orientation, at low cost, and with an adequate crystal size and grade.

The electro-optical layer 3 is advantageously about 10-600 microns in thickness. The layer should be thick enough to obtain adequate quantum detection efficiency (QDE), but thin enough to achieve adequate response time, for a given application.

Adjacent to the layer 3 is a second dielectric layer 4 which is similar to the first dielectric layer 2. Located adjacent to the layer 4 is a second conductive window layer 5 which is transparent, or at least semi-transparent, to radiation of a selected reading wavelength, to be discussed further below. Electrical terminals 6 and 7 are electrically connected to the first and second conductive layers 1 and 5, respectively.

The device is contemplated to be fabricated by one of two techniques. In one technique, the crystalline layer 3 is first be ground and polished and then the layers 1, 2, 4 and 5 are formed thereon by conventional thin-film techniques. In a second technique, all of the layers 1-5 are thin-filmed successively on a substrate, along with electrical connectors. The preferred deposition technique is RF sputtering, although other techniques such as molecular beam epitaxy may also be usable.

In a modulation process according to the invention, a biasing electric field is initially impressed across the device by applying a source of electrical potential across terminals 6 and 7. If the crystal is not illuminated by X-rays, the charge across the detector 11 remains constant.

When a modulated X-ray beam 10 impinges on the active electro-optical layer 3, after passing through the first conductive layer 1 and the first dielectric layer 2, the photons of the X-ray beam generate localized scintillations within the crystalline layer 3. The scintillations within the layer 3 caused by the X-ray locally change the charge state imposed by the biasing electric field, by increasing the charge at locations of the layer 3 that are so illuminated. As a result of the Pockels effect, the refractive index of those locations is thereby changed. This gives rise to differential refraction of a reading beam which is applied to the rear surface of the image detector. Thus, such a reading beam can read the charge state of the rear surface of the layer 3, and hence the pattern of X-ray illumination by the X-ray beam 10.

The principal function of the first dielectric layer 2 is to create a capacitance between layers 1 and 3 which stores the charge created by the photons of the input X-ray. Similarly, the second dielectric layer 4 forms a capacitance between the layers 3 and 5 which stores the output charge of the Pockels cell. Such layers are preferably provided to avoid dissipation of the charges which form the image, but are not strictly necessary if other means, such as the materials that compose the other layers, are provided to minimize such dissipation.

The preceding theoretical discussion, of course, is not intended to limit the invention. Different, or additional, physical mechanisms may be operating in the invention that are presently unknown.

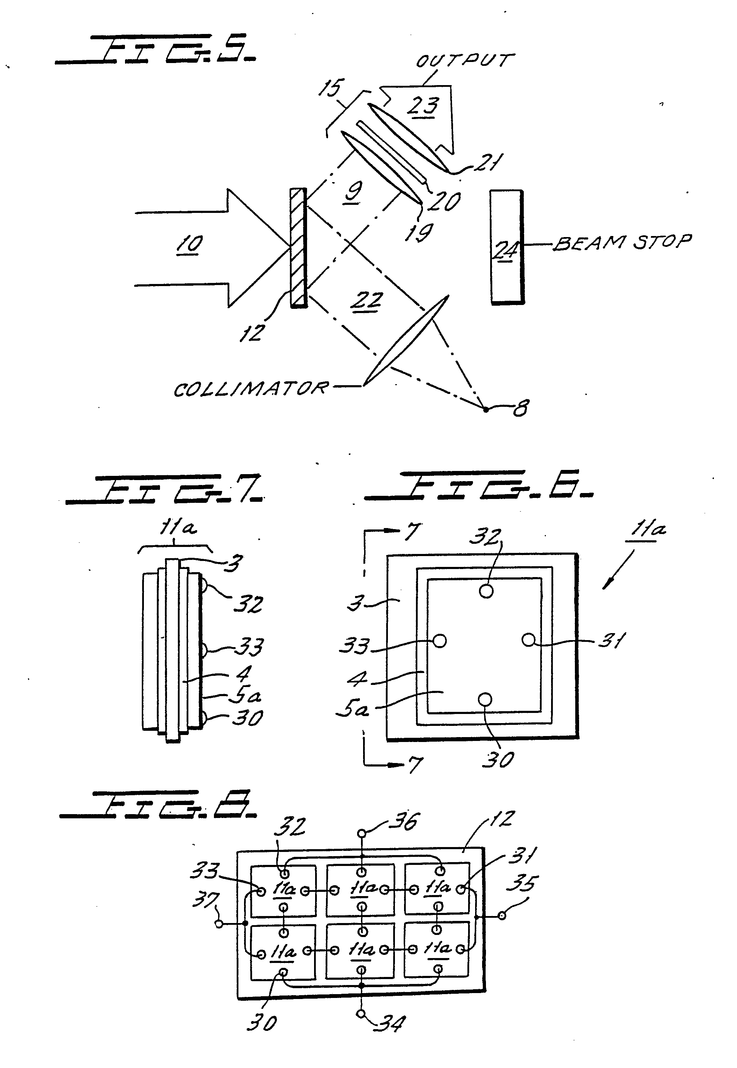

Fig. 2 shows an arrangement for applying a reading beam to the X-ray image detector 11. Visible light emanates from a point source 8, is collimated to form a collimated beam 22, and illuminates the rear surface of the device, i.e., the surface opposite to the surface which receives the X-ray beam. In the following, the faces of the device at which the first conductive layer and the second conductive layer are located will be referred to respectively as the "front" and "rear" surfaces of the device.

The beam 22 passes through the conductive layer 5 and the second dielectric layer 4 to the electro-optic layer 3. When it is reflected by the electro-optic layer 3, it is reflected as a modulated collimated light output beam 9 containing the modulation pattern of the original X-ray beam which impinged on the front surface of the device.

Although visible light is referred to, it is to be understood that other selected wavelengths of radiation may be employed for the reading beam, including ultraviolet, infrared, and others.

Various collimation schemes may be employed to produce the unmodulated collimated beam of visible light 22, including conventional collimating lenses, off-axis parabolas, and so forth. The off-axis parabolic system may be preferable in some applications because of its generally more favorable manufacturing feasibility and cost.

By these means, an X-ray input 10 can be transformed directly and conveniently into a modulated collimated light output beam 9 by the image detector 11 of the invention. After processing, the output beam 18 may be recorded photographically, imaged onto a video camera, or applied directly to the input of an optical image processor, such as that described in commonly assigned U.S. Pat. App. No. 518,690 filed July 29, 1983, the disclosures of which are incorporated herein by reference.

Figs. 3 and 4 show an assembly comprising a plurality of image detectors 11 accommodated in a frame. In this illustration, a frame 12 encloses six image detectors 11. The present limitations in the technology of growing large single crystals of high optical quality dictate that the largest available finished image detector 11 is on the order of about 2 in. (5.1 cm.) square to about 3 in. (7.6 cm.) square. In the event that larger optical-grade single crystals could be obtained, the number of devices 11 in a frame 12 of comparable size could be reduced. For example, larger crystals may be obtainable by thin-film techniques.

The size of the frame should be sufficient to image a substantial area of the human body. For example, for medical imaging, an overall image size of about 14 by 17 in. (36 by 43 cm.) to 16 by 18 in. (41 by 46 cm.) is desirable. Although the number of image detectors employed may be varied depending on the available size of such detectors, the overall size of the frame 12 should preferably not be reduced substantially below such overall image size.

Referring to Fig. 4, the frame 12 comprises front and rear support grids 13 and 14 to which the front and rear sides 1 and 5 of the image detector are respectively fitted. The frame 12 is advantageously made of machinable insulating ceramic materials such as alumina; or Macor (TM), which is available from Corning Glass; or the like. Metallization on either or both of grids 13 and 14, as shown at 16, is provided for making electrical contact with the electrical terminals 6 and 7. The electrical connections can be made by pressing or soldering, resulting in both a physical and electrical connection. Conductive epoxies, wire conductors, or other known techniques can also be used. Terminals 17 and 18 are provided on the support grids 13 and 14, for connection to external control circuitry.

Fig. 5 shows an imaging system which includes a plurality of image detectors assembled in a frame, as shown in Figs. 3 and 4. Light from a point source 8 is collimated into a beam 22 and reflected off the rear surface of the frame 12. The reflected beam 9 is then passed through a Fourier transform processor 15, which is provided for compensating for interference from the shadow of the supporting frame structure 12 in the final X-ray image obtained.

The Fourier transform processor 15 includes first and second Fourier lenses 19 and 21 and a Fourier domain filter 20 therebetween. The latter filter contains the Fourier transform of the supporting frame structure 12. When the collimated modulated beam of light 9 passes through the Fourier transform processor 15, the portion of the image that corresponds to the supporting frame structure 12 is subtracted. The result is an accurate representation, in an output beam 23, of the information in the input X-ray beam 10.

Referring again to Fig. 5, a beam stop 24 is usefully provided for the purpose of absorbing X-rays from the input X-ray beam 10 that pass through the assembly. The beam stop 24 may be lead sheet approximately 1/8-1/4 inches thick. It may further form part of a housing (not shown) which encloses the assembly as a whole.

Thus, in the present invention, the photoconductor layer of prior art detectors is no longer necessary. Direct optical modulation of a reading beam by an X-ray source is accomplished, the reading beam being applied to the rear surface of a crystal matrix. The conventional use of X-ray film is rendered unnecessary, in that the Pockels cell stores the X-ray image. Lower cost photographic film that operates in the visible spectrum may be used instead.

Another preferred embodiment of the invention, which provides substantially the same advantages, is shown in Figs. 6 and 7. An X-ray image detector 11a has on the outside surface of its second conductive layer 5a four contacts 30, 31, 32 and 33. The layer 5a need not be transparent to a reading beam. As viewed in a direction toward the outside surface of the layer 5, the four contacts are near the middle of each of the four sides of the outer surface of that layer, near its edges, in the bottom, right, top and left positions, respectively. Thus, the contacts are substantially 90 degrees apart. The contact 30 in Fig. 7 may be similar to the terminal 7 in Fig. 1. When the electric field across the detector 11 has been modulated by a received X-ray image, the relationship of the signals at the contacts 30-33, after analysis, is indicative of the pattern of the electric field. Thus, the modulation information from the input X-ray beam 10 is available at the contacts 30-33. By appropriate processing, the content of the X-ray image is detected and displayed.

Fig. 6 shows schematically an assembly of six detectors 11a assembled in a frame 12 similar to that in the previous embodiment. Two of the contacts 31 are located at the perimeter of the assembly in Fig. 6 and these are electrically connected together and led out to a terminal 35. Similarly, the three peripheral contacts 32 are electrically connected and led out to a terminal 36; the two peripheral contacts 33 are electrically connected to a terminal 37; and the three peripheral terminals 30 at the bottom of the assembly are electrically connected together and to a terminal 34. Each contact 30-33 that is not located at the perimeter of the frame 12 is connected to the immediately adjacent contact 30-33 of the adjacent detector 11a. In this arrangement, the signals at the terminals 34-37 contain all of the information in the X-ray beam impinging on the entire surface of the assembly; i.e., on all of the component detectors 11a.

In the arrangement of Figs. 6-8, the X-ray beam 10 may be converted directly to an electrical signal on the terminals 34-37 without any reflected light reading beam being required.

Although the invention has been discussed herein with reference to illustrative embodiments thereof, it is to be understood that the invention is not limited to such embodiments. Rather, variations and modifications may occur to one skilled in the art within the scope of the invention, as defined by the claims.

**Claims**

1. An X-ray image detector comprising:
a) a first window layer for transmitting X-radiation;
b) a second window layer for transmitting a reading beam having a selected wavelength; and
c) an electro-optically active layer located between said first and second window layers for receiving X-radiation through said first window layer and receiving such reading beam through said second window layer, said active layer comprising material that has a local index of refraction for said selected wavelength that varies as a function of an electric field in such active layer, such electric field being a function of the local intensity of X-radiation received by said active layer, said active layer thus containing a refraction pattern that is representative of such received X-radiation.

2. A detector as in claim 1, wherein said active layer comprises crystalline material that exhibits the Pockels effect.

3. A detector as in claim 1, wherein said active layer includes $KD_2PO_4$.

4. A detector as in claim 1, wherein said active layer includes $LiNbO_3$.

5. A detector as in claim 1, wherein said active layer includes $Bi_{12}SiO_{20}$.

6. A detector as in claim 1, wherein said active layer includes $Bi_{12}GeO_{20}$.

7. A detector as in claim 1, wherein said active layer includes CdTe.

8. A detector as in claim 1, wherein said active layer includes GaAs.

9. A detector as in claim 1, wherein said active layer includes GaP.

10. A detector as in claim 1, wherein said active layer includes mercuric oxide.

11. A detector as in claim 1, wherein said active layer includes cesium oxide.

12. A detector as in claim 1, wherein said active layer includes $RbH_2PO_4$.

13. A detector as in claim 1, wherein said active layer includes $RbD_2PO_4$.

14. A detector as in claim 1, wherein said active layer material has a relatively low half-wave voltage while having relatively high visible light transmission.

15. A detector as in claim 14, wherein said active layer has a half-wave voltage of less than about 5000 V. and a visible light transmission of at least about 80 percent.

16. A detector as in claim 1, wherein said active layer has relatively high quantum detection efficiency while having relatively low response time.

17. A detector as in claim 16, wherein said active layer is about 10 to 600 microns thick.

18. A detector as in claim 1, wherein said reading beam comprises visible light.

19. A detector as in claim 1, wherein said first and second window layers are electrically conductive.

20. A detector as in claim 19, further comprising means for connecting an electric source to said window layers to impress an initial electric field across said active layer.

21. A detector as in claim 20, further comprising first and second dielectric layers, the first dielectric being sandwiched between the active layer and the first window layer, and the second dielectric layer being sandwiched between the active layer and the second window layer.

22. A detector as in claim 21, wherein said dielectric layers include paraxylene.

23. A detector as in claim 21, wherein said dielectric layers include silicon dioxide.

24. A detector as in claim 1, wherein said first window layer is substantially opaque to visible light.

25. A detector as in claim 1, wherein said first window layer includes indium tin oxide.

26. A detector as in claim 25, wherein said first window layer is about 3 microns thick.

27. A detector as in claim 19, further comprising contact means for sensing the electrical potential at a plurality of points on said second window layer.

28. A detector as in claim 27, wherein said contact means includes a plurality of electrical contacts disposed generally symmetrically about a surface of said second conductive layer.

29. An X-ray image detector comprising:

a) a window layer for transmitting X-radiation;

b) an electro-optically active layer located so as to receive X-radiation through said window layer, said active layer being adapted for having an electric field therein which is locally variable as a function of the local intensity of X-radiation received by said active layer, so that said active layer contains an electric field pattern that is representative of such received X-radiation; and

c) a sensing layer located so as to have electrical potentials therein which vary locally as a function of such electric field pattern in said active layer.

30. A detector as in claim 29, further comprising contact means for detecting the electrical potential at a plurality of points in said sensing layer.

31. A detector as in claim 30, wherein said contact means includes a plurality of electrical contacts affixed generally symmetrically about said sensing layer.

32. A detector as in claim 31, wherein such respective electrical potentials sensed at said plurality of electrical contacts are indicative of such local intensity of X-radiation received by said active layer.

33. A detector as in claim 29, wherein said sensing layer is adapted for transmitting therethrough a reading beam having a selected wavelength, said sensing layer being located so as to transmit such reading beam to said active layer, said active layer comprising material that has an index of refraction for such selected wavelength of such reading beam that is variable as a function of such electric field in said active layer, so that said active layer contains a refraction pattern that is representative of such received X-radiation.

34. A detector as in claim 33, wherein said reading beam comprises visible light.

35. A detector as in claim 29, wherein said window layer is substantially opaque to visible light.

36. A detector as in claim 29, wherein said active layer comprises crystalline material that exhibits Pockels effect.

37. A detector as in claim 29, wherein said window and sensing layers are electrically conductive, and further comprising means for connecting an electric source to said window and sensing layers to impress an initial electric field across said active layer.

38. A detector as in claim 29, further comprising first and second dielectric layers sandwiched between the active layer and, respectively, the window and sensing layers.

39. An X-ray imaging system comprising

a) an X-ray source; and

b) at least one X-ray image detector comprising

i) a window layer for transmitting therethrough X-radiation from said X-ray source;

ii) an electro-optically active layer located so as to receive X-radiation through said window layer, said active layer being adapted for having an electric field therein which is locally variable as a function of the local intensity of X-radiation received by said active layer, so that said active layer contains an electric field patten that is representative of such received X-radiation; and

iii) sensing means for sensing such electric field pattern in said active layer.

40. A system as in claim 39, wherein said sensing means comprises a sensing layer located so as to have electrical potentials therein which are representative of such electric field pattern; said sensing layer having contact means thereon for detecting the electrical potential at a plurality of points in said sensing layer.

41. A system as in claim 40, wherein said contact means includes a plurality of electrical contacts affixed generally symmetrically about said sensing layer.

42. A system as in claim 40, further comprising

a) a frame; a plurality of said X-ray image detectors being mounted in said frame;

b) means for electrically interconnecting respective ones of said contact means on each of said detectors, and

c) a plurality of terminals for receiving such electrical potentials in said sensing layer, each being connected to a respective one of said interconnecting means, and thereby to a respective one of said contact means on each of said X-ray image detectors.

43. A system as in claim 42, wherein such respective electrical potentials sensed at said plurality of terminals are indicative of such local intensities of X-radiation received by each of said active layers of said detectors.

44. A system as in claim 39, wherein said sensing means comprises a sensing layer adapted for transmitting therethrough a reading beam having a selected wavelength, said sensing layer being located so as to transmit such reading beam to said active layer, said active layer comprising material that has an index of refraction for such selected wavelength of such reading beam that is variable as a function of such electric field in said active layer, so that said active layer contains a refraction pattern that is representative of such received X-radiation.

45. A system as in claim 44, further comprising a reading beam source for projecting a reading beam toward said active layer to produce a reflected output beam that is representative of such refraction pattern, and hence of such received X-radiation.

46. A system as in claim 45, further comprising

a) a frame; and

b) a plurality of said X-ray image detectors being mounted in said frame with separators between adjacent detectors, said reflected output beam containing both information that is representative of such refraction patterns in the active layers of said X-ray image detectors, and information that is due to the presence of said separators.

47. A system as in claim 46, further comprising an optical Fourier transform processor for removing such information that is due to the presence of said separators from such reflected output beam.

48. A system as in claim 47, wherein said optical Fourier transform processor comprises

a) first and second Fourier lenses; and

b) a Fourier domain filter between said lenses which contains the Fourier transform of the information that is due to the presence of said separators.

49. A method of X-ray imaging comprising:

a) providing an X-ray image detector for receiving X-rays from an X-ray source, said detector being adapted for having an electric field pattern therein which is representative of such received X-radiation;

b) projecting an X-ray beam containing an X-ray image toward said detector so as to form in said detector an electric field pattern which is representative of such X-ray image; and

c) sensing such electric field pattern so as to detect such X-ray image.

50. A method as in claim 49, including:

a) providing an X-ray image detector having an electro-optically active layer for receiving X-rays from such X-ray source, and for receiving a reading beam having a selected wavelength from a reading beam source, said active layer comprising material that has a local index of refraction for said selected wavelength that varies as a function of such electric field in said active layer, such electric field being a function of the local intensity of such X-rays received by said active layer;

b) projecting such X-ray beam containing such X-ray image toward said active layer so as to form in said active layer a refraction pattern that is representative of such X-ray image; and

c) sensing such electric field by projecting a reading beam having said selected wavelength toward said active layer to produce a reflected output beam that is representative of said refraction pattern, and hence of such received X-ray image.

51. A method as in claim 49, including sensing such electric field pattern by measuring the electrical potential at a plurality of points within such electrical field.

52. An X-ray image detector comprising an electro-optically active body for receiving X-radiation containing an image; said body being adapted for detecting such image by forming a refraction pattern for differentially refracting incident light in response to such received X-radiation.

53. An X-ray image detector comprising an electro-optically active body for receiving X-radiation containing an image; said body being adapted for detecting such image by having a detectable electric field pattern therein that is representative of such received X-radiation.

## FIG.1.

11

2 3 4 5

1

6 7

## FIG.2.

11

9

MODULATED
X-RAY
INPUT

10

MODULATED
COLLIMATED
LIGHT
OUTPUT

22

6

7

COLLIMATED
LIGHT

COLLIMATOR

POINT SOURCE-8

## FIG.3.

17

12

4

11  11  11

11  11  11

4

18

## FIG.4.

17

16

13

11  11  14

18  11

FIG.5.

OUTPUT

15
23
21
20
19
9
10
12
22
24  BEAM STOP
COLLIMATOR
8

FIG.7.
11a
3
32
33
4
5a
30

FIG.6.
7
32
11a
3
33
31
4
5a
30
7

FIG.8.
32
36
12
33
31
37
11a  11a  11a
35
11a  11a  11a
30
34